# EUROPEAN PATENT APPLICATION

(11) **EP 2 230 589 A1**
(43) Date of publication of application: **22.09.2010**
(21) Application number: 09155603.5
(22) Date of filing: 19.03.2009
(51) Int. Cl.: G06F 3/048

(54) **Touch screen display device**

(71) Applicant: Siemens Aktiengesellschaft, 80333 München (DE)
(72) Inventor: Daniel, Donny, 560034, Bangalore (IN)

(57) **Abstract**

The present invention relates to a method, computer-readable media system for determining an input for a touch screen display device, wherein the method comprises detecting a selection entity (204) hover input relative to an input surface (202) of a touch screen display device (110), determining a hover area (306) of said selection entity (204) relative to said input surface (202) of said touch screen display device (110) responsive to said hover input, and providing a visual indication of at least one control defined substantially within said hover area (306) in a non occluded area (402) of said input surface (202) of said touch screen display device (110).

## Description

The present invention relates to a method, computer-readable media and system for determining an input for a touch screen display device.

Touch screen display devices have become very popular due to the innovative methods of human computer interaction (HCI). The touch screen displays can emulate complex input methods without the need for dedicated hardware to be present on the device. For an example, the user interface (UI) software can display various targets, controls, keys, or input tabs on an input surface of the touch screen display, which the user may select by touching over the desired displayed target, control, key, or input tab on the input surface of the touch screen display. This eliminates the requirement of dedicated controls, keys, or input tabs in the form of a physical key pad and thus, enabling to reduce the size of a device.

Accordingly, touch screen display devices are being implemented in a plurality of devices, such as, mobile phones, personal digital assistants (PDAs), tablet personal computers (PCs), automated teller machines (ATMs), kiosk systems, portable game consoles, and many other types of information appliances. Additionally, touch screen display devices are popular in heavy industry and other situations, where mouse and keyboards do not allow a satisfactory, intuitive, rapid, or accurate interaction by a user with the displayed content.

The user may make a selection of the desired target, control, keys or input tabs using a selection entity, such as, a body part such as a finger or fingernail, a stylus or any other selection instrument suitable for making a selection. At many instances, a user prefers using his or her finger or other selection instruments to make a selection of the desired target, control, key, or input tab on the displayed on the input surface of the touch screen display device, instead of a stylus. Use of a finger or other selection entity instead of stylus occludes targets, controls, keys, or input tabs displayed on the input surface of the touch screen display device from the users view.

It is an object of the invention to eliminate or at least minimize the above mentioned problems.

The above object is achieved by a method and one or more computer-readable media for determining an input for a touch screen display device, wherein the method comprises detecting a selection entity hover input relative to an input surface of a touch screen display device, determining a hover area of the selection entity relative to the input surface of the touch screen display device responsive to the hover input, and providing a visual indication of at least one control defined substantially within the hover area in a non occluded area of the input surface of the touch screen display device.

This enables in providing a user with a visual feedback while attempting to make a selection of a control.

According to an embodiment, the providing of the visual indication of the at least one control defined substantially within the hover area in the non occluded area of the input surface of the touch screen display device includes providing a visual indication of a control under an axis of the selection entity.

This enables providing a user with a visual indication of the control which shall be selected if the selection entity is lowered at that moment to touch the input surface of the touch screen display device.

According to yet another embodiment, the providing of the visual indication of the control under the axis of the selection entity includes, determining positions of controls defined substantially within the hover area with respect to the axis of the selection entity, assigning weightage to the controls based on the proximity of the controls to the axis of the selection entity, storing identification information of the control having the highest weightage in a memory, and providing a visual indication of a control having the highest weightage in the non occluded area of the input surface of the touch screen display device.

Thereby, enabling determination of the control most proximate to the axis of the selection entity accurately, in cases where the position of the selection entity changed unintentionally by user due to shaky hands.

According to yet another embodiment, the method further comprises detecting the selection entity touch input relative to the input surface of the touch screen display device, and determining a touch area of the selection entity relative to the input surface of the touch screen display device responsive to the touch input.

Thereby, providing the touch area of the selection entity relative to the input surface of the touch screen display device responsive to the touch input.

According to yet another embodiment, the method further comprises retrieving identification information of the control stored in the memory if the hover area and the touch area overlap substantially, processing identification information of the control to identify the control, and interpretating the control as an input selected responsive to the touch input.

This enables interpretating the desired control touched using the selection entity accurately, even though the position of the selection entity may have changed unintentionally due to shaky hands of the user.

According to yet another embodiment, the method further comprises interpretating a control selected in actual responsive to the touch input as an input if the hover area and the touch area do not overlap substantially.

This enables interpretating the desired control touched using the selection entity accurately when the user changes the position of the selection entity intentionally.

According to yet another embodiment, the detection of the hover input relative to the input surface of the touch screen display device includes determining whether the selection entity is within a predetermined range from the input surface of the touch screen display device along an axis perpendicular to a plane of the input surface of the touch screen display device.

According to yet another embodiment, the determination of the hover area is derived as a function of position of an axis of the selection entity relative to the input surface of the touch screen display device and a pre-defined radius.

According to another embodiment, the determination of the touch area is derived as a function of position of an axis of the selection entity relative to the input surface of the touch screen display device and a pre-defined radius.

Another embodiment includes a touch screen display device comprising an input surface capable of detecting a selection entity hover input relative to the input surface, and
a processor configured to determine a hover area of the selection entity relative to the input surface responsive to the hover input, and provide a visual indication of at least one control defined substantially within the hover area in a non occluded area of the input surface.

The present invention is further described hereinafter with reference to illustrated embodiments shown in the accompanying drawings, in which:
- FIG 1: illustrates functional block diagram of a representative hardware environment that may be used to implement the embodiments of the invention,
- FIG 2: is side view of an input surface of a touch screen display device,
- FIG 3: illustrates a plan view of an input surface of a touch screen display device,
- FIG 4: illustrates providing of visual indication in a non occluded area of an input surface of a touch screen display device according to an embodiment herein,
- FIG 5a-5b: illustrates determination of a control as a hover input responsive to a selection entity being proximate to the input surface of the touch screen display device according to an embodiment herein,
- FIG 6: illustrates a hover area and a touch area on an input surface of a touch screen display device according to an embodiment herein,
- FIG 7: is a block diagram illustrating the processing of a hover and a touch input according to an embodiment herein, and
- FIG 8: is a flow diagram illustrating a method of determining an input for a touch screen display device according to an embodiment herein

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

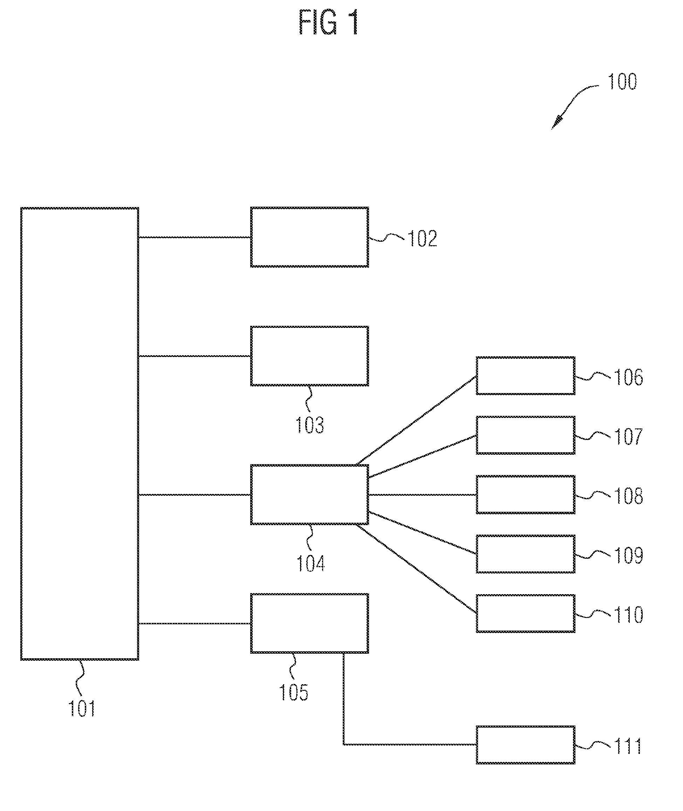

Fig. 1 depicts a representative hardware environment for practicing the embodiments herein. This schematic drawing illustrates a hardware configuration of system 100 in accordance with the embodiments herein. The system 100 may include but is not limited to computer systems, laptop devices, hand-held devices, personal digital assistants (PDAs), mobile telephones, kiosks, ATMs, Electronic display and interaction systems, portable entertainment systems and microprocessor based electronic systems. Typically, the system 100 comprises at least a processor or a central processing unit (CPU) 101. The CPU 101 is communicatively connected to various devices such as a memory 102, input/output (I/O) controller 103, user interface controller 104, and communication controller 105. Depending on the type and configuration of the system 100, the memory may be volatile (such as random access memory (RAM) etc., non-volatile (read only memory (ROM), flash memory devices etc.,) or a combination of the two. The input/output (I/O) controller 104 can connect to computer readable media, such as a computer storage media. Computer storage media includes volatile, non-volatile, removable and non removable media implemented for storing information. The system 100 can read the inventive instructions stored on the computer storage media and follow these instructions to execute the method described by the embodiments herein. The user interface controller 104 can connect to a keyboard 106, mouse 107, speaker 108, microphone 109, touch screen display device 110 and/or other user interface devices to gather user input and also to provide system output to the user. The touch screen display device 110 allows a user to provide input using a selection entity. The selection entity includes, but nor for limitation, a stylus, finger, or any body part. The touch screen display device 110 may be a device separate from or part and integrated with system 100. Further, a communication controller 106 connects to a computer network such as an internet 114, via a modem, Ethernet port, or some other connection known in the art. In some embodiments, the computer network may be a local area network (LAN), or wide area network (WAN).

The touch screen display device 110 may be capable of detecting the presence of a selection entity without the selection entity actually touching the input surface of the touch screen display device 110. For example, some touch screen display devices can detect the presence of a selection entity within a predetermined range of their input surfaces.

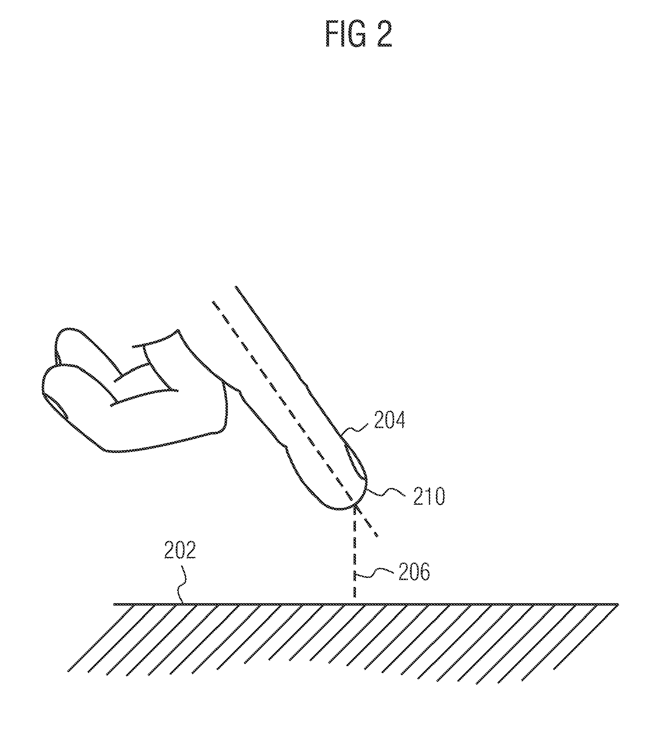

Referring now to Fig 2, the touch screen display device 110 comprises a touch sensitive surface 202 that will be referred to herein as input surface. The input surface 202 displays information to the user including controls which the user may select by touching the control displayed on the input surface 202 of the touch screen display device 110 using a selection entity. In the shown example of FIG 2, a user's finger 204 is illustrated as an example of a selection entity and is referenced as selection entity. The selection entity 204 is used for making selection of a desired control displayed on the input surface 202 of the touch screen display device 110.

The touch screen display device 110 is configured to detect both the physical contact of the selection entity 204 as well as the proximity of the selection entity 204 to the input surface 202 along an axis 206 perpendicular to the input surface 202, for example a z-axis. The proximity of the selection entity 204 is detected by the touch screen display device 110 if the tip 210 of the selection entity 204 is within a range of the input surface 202 of the touch screen display device 110. The range may be predetermined and thus, the touch screen display device 110 may be configured to detect proximity of the selection entity 204 within the predetermined range. Moreover, the touch screen display device 110 may be able to estimate the distance between the tip 210 of the selection entity 204 and the input surface 202 of the touch screen display device 110 along the axis 206.

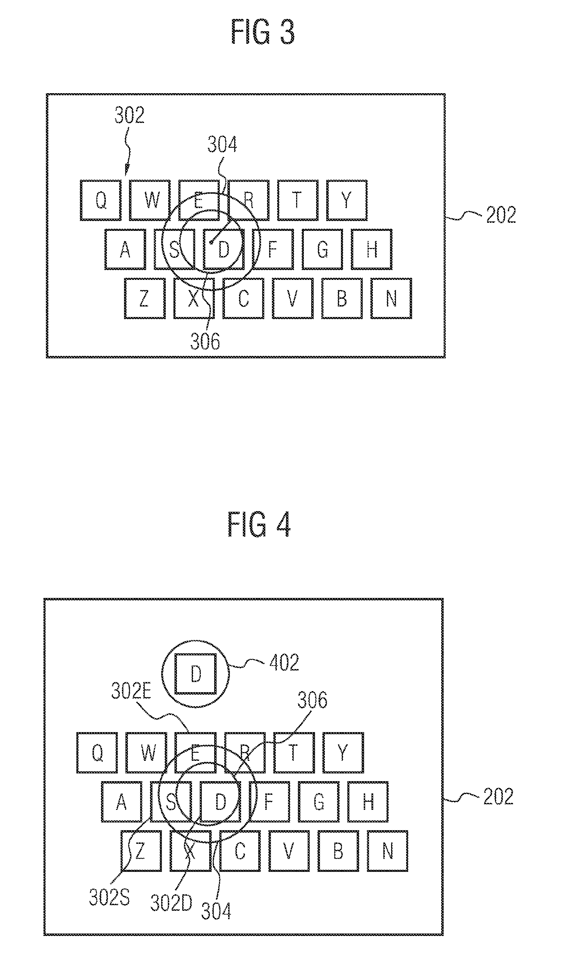

Referring now to FIG 3, a plurality of controls 302 are displayed on the input surface 202. Prior to making a selection on the touch screen display device 110 using the selection entity 204, by making a contact with the input surface 202, the selection entity 204 is made to hover over the input surface 202 of the touch screen display device 110. Thereafter, once the selection entity 204 is over a control which is to be selected, the user lowers the selection entity 204 to touch a control displayed on the input surface 202 of the touch screen display device 110 to select the control. The area of the input surface 202 which is covered by the selection entity 204 and is occluded from the user's view while attempting to make a selection of a desired control is referenced to as an occluded area 304 of the input surface 202 of the touch screen display device 110. Controls within the occluded area 302 are not visible to the user as the selection entity 204 of the user occludes the user's view of the controls. Thus, the user in attempting to make a selection of a control is deprived of a visual feedback while selecting the control. Occlusion of the controls may lead to selecting a target which is incorrect due to small size of the controls, parallax and shaky hands.

The occluded area 304 includes an area of the input surface 202 referenced to as a hover area 306. The hover area 306 is the actual area of the input surface 202 of the touch screen display device 110 over which the selection entity 204 is hovering. For an example, the hover area 306 is the area of the tip 210 of the selection entity 204, which will actually touch the input surface 202 on the touch screen display device 110 when lowered to make a selection of a control displayed on the input surface 202 of the touch screen display device 110 from the location of the hovering (assuming there is no parallax or any further movement of the selection entity 204 due to shaky hands). Typically, the hover area 306 denotes the area of the input surface 202 over which the tip 210 of the selection entity 204 is hovering prior to making a selection of the desired control.

FIG 4 illustrates the occluded area 304 and the hover area 306 on the input surface 202 of the touch screen display device 110 for the selection entity 204 prior to making the selection of a control by touching the input surface 202 of the touch screen display device 110 over the desired displayed control. As illustrated in the example of Fig 4, the occluded area 304 includes the desired control the user is attempting to select. The hover area 306 of the input surface 202 of the touch screen display device 110 over which the selection entity 204 hovers prior to making a selection of the desired control, may include the desired control or a portion of the desired control. As illustrated in the example of Fig 4, the hover area 306 includes a portion of controls D 302D, S, 302S and E 302E. As it is seen that the hover area 306 substantially covers control D 302D, the input represented by the control D 302D, i.e., D is displayed on a non-occluded area 402 of the input surface 202 of the touch screen display device 110. The control substantially within the hover area is the control for which the centre is most proximate to the axis 206 of the selection entity 204. In another implementation, a representation of the hover area 306 may be displayed on a non-occluded area of the input surface 202 of the touch screen display device 110. In yet another implementation, controls substantially within the hover area 306 may be displayed on a non-occluded area of the input surface 202 of the touch screen display device 110. This facilitates the user to ascertain the control over which the selection entity 204 is currently hovering and if the selection entity 204 is lowered to touch the control at that moment, the control displayed on the non occluded area shall be selected (assuming that there is no parallax error) error. Thus, the user is provided with a visual feedback while attempting to make a selection of a control. In case the control displayed in the non occluded area is not the desired control, the user may move the selection entity 204 over the desired control to be selected. Further, while moving the selection entity 204 over the desired control the user can ascertain if the selection entity is over the desired control from the visual feedback provided. The provision of visual feedback prior to a making a selection makes the user aware of the control which will be selected if the selection entity 204 is lowered at that particular moment to touch the input surface 202 of the touch screen display device 110.

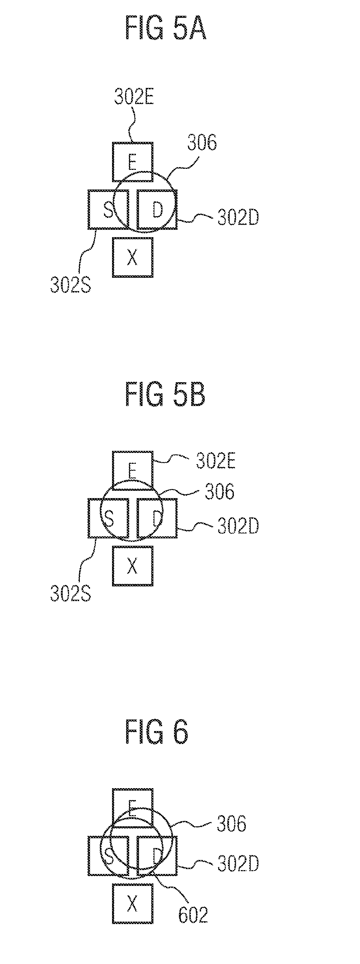

Fig 5a through 5b illustrates determination of control as a hover input responsive to a selection entity 204 being proximate to the input surface 202 of the touch screen display device 110. For an example, the hover input may be detected if the selection entity 204 is within a predetermined range from the input surface 202 of the touch screen display device 110. Referring now to FIG 5a, the hover area 306 includes a portion of controls D 302D, S, 302S and E 302E. According to an implementation, the control D 302D is displayed on a non-occluded area of the input surface 202 of the touch screen display device 110 as the control D 302D is substantially within the hover area 306 and, thus, is the control whose centre is most proximate to the axis 206 of the selection entity 204.

In an embodiment, proximity of a control to the axis 206 may be determined by determining the positions of the controls included completely or in part within the hover area 306. In an embodiment, positions of the controls may be determined by determining the Cartesian coordinates of the centers of the controls. Thereafter, each control included within the hover area 306 completely or in part is assigned a weightage based on the proximity of the controls to the axis 206 of the selection entity 204. For an example, proximity of a control to the axis 206 of the selection entity 204 may be computed by determining the distance between the positions of the axis 206 of the selection entity 204 relative to the input surface 202 of the touch screen display device 110 and the centre of a control. The control having the highest weightage is the control most proximate to the axis 206 of the selection entity 204. Accordingly, in an embodiment, the control having the highest weightage may be displayed on a non-occluded area 402 of FIG 4 of the input surface 202 of the touch screen display device 110. For example, in the illustrated Fig 5a, weightage is assigned to the controls based on the proximity of the controls to the axis 206 of the selection entity 204.

Assigning weightage based on the proximity of a control to the axis 206 of the selection entity 204 allows determining the control most proximate to the axis 206 of the selection entity 204 accurately, in cases where the position of the selection entity 204 is changed unintentionally by user due to shaky hands.

In an embodiment, the weightage of the controls may be stored in a memory 102 of the system 100 of FIG 1. In yet another embodiment, identification information of the control having the highest weightage may also be stored in the memory 102 of the system 100.

Referring again to FIG 5a, it is illustrated that the hover area 306 includes portions of controls D 302D, S, 302S and E 302E. However, amongst the portions of controls D 302D, S, 302S and E 302E, included within the hover area 306, the control D 302D is substantially within the hover area 306. Thus, the control D 302D is the most proximate control to the axis 206 of the selection entity 204 and is considered as the desired control the user intends to select. Thus, the desired control to be selected by the user is assumed to be control D 302D and the input represented by the control d 302d, i.e., D is displayed on a non-occluded area 402 of the input surface 202 of the touch screen display device 110.

Referring now to FIG 5b, it is shown that the hover area 306 includes portions of controls D 302D, S, 302S and E 302E. In the shown example of FIG 5b, the hover area 306 covers substantially controls D 302D and S, 302S. The controls D 302D and S, 302S are equally proximate to the axis 206 of the selection entity 204. To overcome this ambiguity, the input represented by either of the controls D 302D or S, 302S may be displayed on a non-occluded area 402 of the input surface 202 of the touch screen display device 110. This visual representation of the input represented by either of the controls enables a user to know whether he or she is over the desired control. In case the displayed input is not the desired input to be selected by the user, the user may move the selection entity 204 over the desired control to select the control by touching the desired control displayed on the input surface 202 of the touch screen display device 110.

FIG 6 illustrates the hover area 306 and a touch area 602. The touch area 602 is the actual area of the input surface 202 of the touch screen display device 110 where the tip 210 of the selection entity 204 makes a contact with the input surface 202 of the touch screen display device 110 in order to make a selection of a desired control. In an embodiment, the touch area 602 may be derived as a function of the position of the touch relative to the input surface 202 of the touch screen display device 110. For an example, the position of the touch of the selection entity 204 may be derived as the Cartesian coordinates of the centre of the tip 210 of the selection entity 204 making a contact with the input surface 202, i.e., the axis 206 of the selection entity 204. However, as the selection entity 204 approaches the input surface 202 of the touch screen display device 110 and eventually comes into contact with it, the actual touch location may differ from the hover area 306. This difference is location may be due to parallax and/or shaky hands.

In the shown example of FIG 6, the hover area 306 substantially covers control D 302D. Therefore, in accordance to some embodiments herein, the most proximate control determined shall be control D 302D and thus, the control D 302D is assigned the highest weightage. In the shown example of FIG 6, the touch area 602 overlaps with the hover area 306 substantially. For example, the touch area 602 and the hover area 306 may overlap substantially if the area of overlap is greater than half the area of either the touch area 602 or the hover area 306.

In an embodiment, as the touch area 602 and the hover area 306 overlap substantially, the identification information of the control having the highest weightage may be retrieved from the memory 102 and provided to the CPU 101. The CPU 101 processes the identification information to identify the respective control and interprets the control as the desired control selected responsive to the touch input of the user.

In another embodiment, if the touch area 602 and the hover area do not overlap substantially, the CPU may interpret the control which is touched by the user in actual as the desired input.

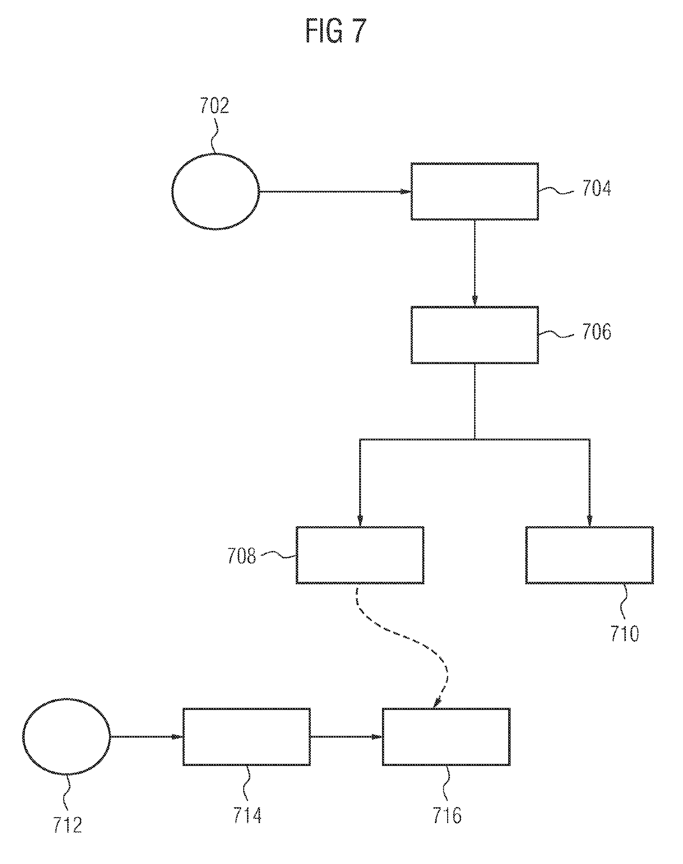

FIG 7, with reference to FIG 1 through FIG 6, illustrates processing of a hover and a touch input according to an embodiment herein. Prior to making a selection of a desired control, the selection entity 204 hovers over the desired control displayed on the input surface 202 of the touch screen display device 110. At 702, hovering of the selection entity 204 above the input surface 202 of the touch screen display device 110 is detected. On detection of hovering, at 704, an area of hovering referenced as a hover area 306 is determined. In an embodiment, the hover area 306 is determined as a function of position of the axis 206 of the selection entity 204 relative to the input surface 202 of the touch screen display device 110 and a pre-defined radius. The position of the selection entity 204 relative to the input surface 202 of the touch screen display device 110 may be the Cartesian coordinates of the selection entity 204 relative to the input surface 202. At 706, controls included completely or in part within the hover area 306 are determined and a weightage is assigned to each of the controls included completely or in part within the hover area 306 based on the proximity of the centers of the controls to the axis 206 of the selection entity 204. At 708, identification information of the control having the highest weightage is stored in the memory 102. At 710, in an embodiment, an input represented by the control having the highest weightage is displayed on a non-occluded area 304 of the input surface 202 of the touch screen display device 110. In another embodiment, a representation of the hover area 306 may be displayed in a non-occluded area 304 of the input surface 202 of the touch screen display device 110. In yet another embodiment, the control having the highest weightage may be displayed on a non-occluded area 304 of the input surface 202 of the touch screen display device 110. At 712, a touch input is detected when the selection entity 204 makes a contact with the input surface 202 to touch a desired control. At 714, the touch area 602 of the input surface 202 of the touch screen display device 110 is determined. If the touch area 602 and the hover area 306 overlap substantially, then at 716, identification information of the control stored in the memory 102 is retrieved and the input represented by the control for which the identification information has been retrieved is interpreted as the desired input selected by the user. In another embodiment, if the touch area 602 and the hover area 306 do not overlap substantially, then the control which is touched by the user in actual using the selection entity 204 is interpreted as the desired input.

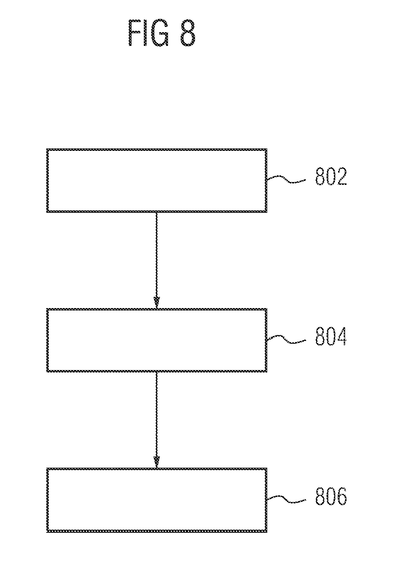

FIG 8, with reference to FIG 1 through FIG 7 illustrates a flow diagram illustrating a method of determining an input for a touch screen display device 110 according to an embodiment herein, wherein the method comprises, at block 802, detecting a selection entity 204 hover input relative to an input surface 202 of a touch screen display device 110, at block 804, determining a hover area 306 of the selection entity 204 relative to the input surface 202 of the touch screen display device 110 responsive to the hover input and at block 806, providing a visual indication of at least one control defined substantially within the hover area 306 in a non hovered area of the touch screen display device 110.

The techniques described herein enable providing a user with a visual feedback while attempting to make a selection of a control. In case the control displayed in the non occluded area is not the desired control, the user may move the selection entity over the desired control to be selected. Further, while moving the selection entity over the desired control, the user can ascertain if the selection entity is over the desired control from the visual feedback provided. The provision of visual feedback prior to a making a selection makes the user aware of the control which will be selected if the lowers the selection entity at that particular moment to touch the input surface of the touch screen display device.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skill in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method of determining an input for a touch screen display device, said method comprising:
detecting a selection entity (204) hover input relative to an input surface (202) of a touch screen display device (110),
determining a hover area (306) of said selection entity (204) relative to said input surface (202) of said touch screen display device (110) responsive to said hover input, and
providing a visual indication of at least one control defined substantially within said hover area (306) in a non occluded area (402) of said input surface (202) of said touch screen display device (110).

2. The method according to claim 1, wherein providing said visual indication of said at least one control defined substantially within said hover area (306) in said non occluded area (402) of said input surface (202) of said touch screen display device (110) includes providing a visual indication of a control under an axis (206) of said selection entity (204).

3. The method according to claim 2, wherein providing said visual indication of said control under said axis (206) of said selection entity (204) includes:
determining positions of controls defined substantially within said hover area (306) with respect to said axis (206) of said selection entity (204),
assigning weightage to said controls based on the proximity of said controls to said axis (206) of said selection entity (204),
storing identification information of said control having the highest weightage in a memory (102), and
providing a visual indication of a control having the highest weightage in said non occluded area (402) of said input surface (202) of said touch screen display device (110).

4. The method according to claim 3, further comprising:
detecting said selection entity (204) touch input relative to said input surface (202) of said touch screen display device (110), and
determining a touch area (602) of said selection entity (204) relative to said input surface (202) of said touch screen display device (110) responsive to said touch input.

5. The method according to claim 4, further comprising:
retrieving identification information of said control stored in said memory (102) if said hover area (306) and said touch area (602) overlap substantially,
processing identification information of said control to identify said control, and
interpretating said control as an input selected responsive to said touch input.

6. The method according to claim 4, further comprising interpretating a control selected in actual responsive to said touch input as an input if said hover area (306) and said touch area (602) do not overlap substantially.

7. The method according to claim 1, wherein the detection of said hover input relative to said input surface (202) of said touch screen display device (110) includes determining whether said selection entity (204) is within a predetermined range from said input surface (202) of said touch screen display device (110) along an axis (206) perpendicular to a plane of said input surface (202) of said touch screen display device (110).

8. The method according to claim 1, wherein the determination of said hover area (306) is derived as a function of position of an axis (206) of said selection entity (204) relative to said input surface (202) of said touch screen display device (110) and a pre-defined radius.

9. The method according to claim 4, wherein the determination of said touch area (602) is derived as a function of position of an axis (206) of said selection entity (204) relative to said input surface (202) of said touch screen display device (110) and a pre-defined radius.

10. One or more computer-readable media containing a computer program that is executable by a processor to perform the method recited in claims 1 to 9.

11. A touch screen display device comprising:
an input surface (202) capable of detecting a selection entity (204) hover input relative to said input surface 202), and
a processor (101) configured to:
determine a hover area (306) of said selection entity (204) relative to said input surface (202) responsive to said hover input, and
provide a visual indication of at least one control defined substantially within said hover area (306) in a non occluded area (402) of said input surface (202).

12. The touch screen display device according to claim 11, wherein said processor (101) is configured to provide a visual indication of a control under an axis (206) of said selection entity (204).

13. The touch screen display device according to claim 12, wherein said processor (101) is configured to:
determine positions of controls defined substantially within said hover area (306) with respect to said axis (206) of said selection entity (204),
assign weightage to said controls based on the proximity of said controls to said axis (206) of said selection entity (204),
store identification information of said control having the highest weightage in a memory (102), and
provide a visual indication of a control having the highest weightage in said non occluded area (402) of said input surface (202).

14. The touch screen display device according to claim 13, wherein:
said input surface (202) detects said selection entity (204) touch input relative to said input surface (202), and
said processor (101) is configured to determine a touch area (602) of said selection entity (204) relative to said input surface (202) responsive to said touch input.

15. The touch screen display device according to claim 4, wherein said processor (101) is configured to:
retrieve identification information of said control stored in said memory (102) if said hover area (306) and said touch area (602) overlap substantially,
process identification information of said control to identify said control, and
interpret said control as an input selected responsive to said touch input.
